# EUROPEAN PATENT APPLICATION

(11) **EP 2 292 463 A1**
(43) Date of publication of application: **09.03.2011**
(21) Application number: 10008257.7
(22) Date of filing: 06.08.2010
(51) Int. Cl.: B60N 2/42, B60N 2/427, B60N 2/68

(54) **Seat structure of vehicle**

(30) Priority: 07.09.2009 JP 2009205749
(71) Applicant: Mazda Motor Corporation, Aki-gun Hiroshima 730-8670 (JP)
(72) Inventor: Suzuki, Takashi, Hiroshima, 730-8670 (JP)
(74) Representative: Müller-Boré & Partner Patentanwälte

(57) **Abstract**

A seat structure of a vehicle, comprising a seatback frame **15** which is provided on a vehicle-inside of a seatback **8** which is provided at a rear portion of a seat cushion **7** and supports a back of a passenger **X,** a side frame **17** which extends vertically beside the seatback frame **15,** and a pad member **12** which covers the side frame **17,** the pad member **12** forming a shape of the seatback **8,** wherein an impact reduction portion **20** to reduce an impact from a vehicle side is provided at the side frame. Accordingly, the seat structure of a vehicle which can reduce the impact load from the vehicle side portion at the vehicle side collision and thereby properly decrease the load inputting to the passenger's chest portion can be provided.

## Description

The present invention relates to a seat structure of a vehicle comprising a seatback frame provided on a vehicle-inside of a seatback, a side frame extending vertically beside the seatback frame, and a pad member covering the side frame, the pad member forming a shape of the seatback.

In general, the seat structure of a vehicle comprises the seatback frame provided on the vehicle-inside of the seatback which is provided at a rear portion of the seat cushion of the seat and supports the back of a passenger seated in the seat, the side frame extending vertically beside the seatback frame, and the pad member covering the side frame, the pad member forming the shape of the seatback. Herein, this seat structure of a vehicle equipped with the side frame has a problem in that when a load (impact load) is inputted to the passenger seated in the seat from the vehicle side at a vehicle side collision, the side frame may hit against a chest portion of the passenger, so that the impact acting on the passenger may become improperly large.

Japanese Patent Laid-Open Publication No. 2008-212397 proposes one of the countermeasure structures to solve this problem. Herein, the side frame is configured so that its upper portion is slender to avoid an overlap of the passenger's chest portion with the side frame in a vehicle side view when the passenger is seated. Further, the U-shaped bar member (see the wire member) is provided at the side frame so as to project forward so that the passenger seated in the seat can be held by this bar member in the vehicle width direction at the normal state, and that the impact acting on the vehicle side face can be absorbed at the vehicle side collision.

However, the above-described structure has another problem in that the holding power of the passenger may be insufficient because of the slender upper portion of the side frame and two-part members of the side frame (two members of the side frame and the bar member) may make the structure complex and increase the number of parts and assembling steps.

Meanwhile, Japanese Utility Model Laid-Open Publication No. 5-70345 discloses the back frame to absorb the impact load properly at the vehicle collision. Herein, the back frame has the side frames which are arranged on both sides of the back frame, and convex notches are formed at front and rear portions of the side frame so as to extend over an entire width of the side frame. The impact load can be absorbed by the notches. According to this structure, however, even though the impact load at the vehicle frontal or rear collision can be absorbed, it may be impossible that the impact load at the vehicle side collision is absorbed.

Further, Japanese Patent Laid-Open Publication No. 2006-110221 discloses the seat structure of a vehicle equipped with the side frame, in which the support pad, which may be made from a synthetic resin, such as hard polyurethane foam, is attached to the front side of the side frame. This support pad extends vertically from a position facing to a shoulder portion of the passenger seated to a position facing to a waist portion of the passenger, and its lower portion facing to the passenger's waist portion projects forward from its upper portion. According to this structure, the holing of the passenger seated in the seat can be improved by the support pad, but it may not be properly prevented by the support pad that the side frame comes toward the passenger at the vehicle side collision.

Moreover, Japanese Patent Laid-Open Publication No. 2000-125988 discloses the structure in which the seatback has the side support portion to support the passenger seated in the seat from the vehicle side, and the energy-absorbing pad is arranged inside the side support portion so as to absorb the impact at the vehicle side collision. However, this energy-absorbing pad is provided on the vehicle-outside of the side frame in the vehicle width direction, so any idea of preventing the side frame from coming toward the passenger by the energy-absorbing pad is not disclosed in the above-described publication.

An object of the present invention is to provide a seat structure of a vehicle which can reduce the impact load from the vehicle side portion at the vehicle side collision and thereby properly decrease the load inputting to the passenger's chest portion.

The object is solved by the seat structure of a vehicle according to the present invention of the independent claim. Preferred embodiments of the present invention are subject of the dependent claims.

According to the present invention, there is provided a seat structure of a vehicle, comprising a seatback frame provided on a vehicle-inside of a seatback (i.e., on an inside of a seatback in a vehicle width direction) which is provided at a rear portion of a seat cushion of a seat and supports a back of a passenger seated in the seat, a side frame extending vertically beside the seatback frame, and at least one pad member covering the side frame, the pad member forming at least part of a shape of the seatback, wherein an impact reduction structure to reduce an impact from a vehicle side is provided.

According to the present invention, since the impact reduction structure is provided, the impact load from the vehicle side portion at the vehicle side collision can be reduced, so that the load inputting to the passenger's chest portion can be decreased.

According to an embodiment of the present invention, the impact reduction structure comprises an impact reduction portion to reduce the impact from the vehicle side is provided at the side frame. According to another embodiment of the present invention, an impact reduction portion to reduce the impact from the vehicle side is provided at the side frame, which constitutes the impact reduction structure. Herein, the impact reduction portion may be formed by a weak portion, thin portion, opening portion, rigidity-reducing portion or any other portion which causes deformation or split of the side frame at the vehicle side collision. Thereby, since the impact reduction portion is provided at the side frame itself, the above-described effect of the present invention can be properly obtained without making the structure complex or increasing the number of parts and manufacturing steps.

According to another embodiment of the present invention, the impact reduction portion causes deformation of the side frame by the impact from the vehicle side. Thereby, the load inputting to the passenger's chest portion can be properly decreased. Further, since the side frame deforms inside the pad member, the hardness of the side frame can be properly reduced with the pad member. Accordingly, the reduction of the impact load acting on the passenger at the vehicle side collision can be properly achieved.

According to another embodiment of the present invention, the impact reduction portion comprises a weak portion which is formed at the side frame so as to extend vertically, the weak portion being deformable by the impact from the vehicle side. Herein, the weak portion may be comprised of a thin portion, an opening portion, such as a slot, or the like. Thereby, since the weak portion as the impact reduction portion extends vertically, the deformation of the side frame is caused by the weak portion easily, so that the reduction of the inputted load to the passenger's chest portion can be properly achieved.

According to another embodiment of the present invention, the weak portion comprises a thin portion formed at the side frame. The thin portion can be easily formed by pressing concurrently with forming the side frame.

According to another embodiment of the present invention, another weak portion is further formed so as to extend continuously from the weak portion toward a front end portion of the side frame. Thereby, both the weak portion extending vertically and the weak portion formed at the front end portion of the side frame can cause the split of a specified portion of the side frame which may give the impact to the passenger at the vehicle side collision off a frame body of the side frame. Thus, this specified portion of the side frame may not be restrained by the pad member, so that the impact which the side frame may give to the passenger can be reduced.

According to another embodiment of the present invention, the impact reduction portion is formed at a position which substantially corresponds to a chest portion of the passenger seated in the seat. Thereby, the side frame is made deform or split properly at the position corresponding to the passenger's chest portion, so that the impact given to the passenger's chest portion can be reduced. Accordingly, the pressing of the chest portion of the passenger can be reduced.

According to another embodiment of the present invention, a side airbag device with an airbag which is inflatable beside the passenger when a specified condition is satisfied is attached to the side frame, and an inflator to supply gas for the airbag is arranged at a specified position which is rearward from the impact reduction portion. Herein, the satisfaction of the specified condition may be determined by checking whether the lateral acceleration inputted from the vehicle side exceeds a specified value or not. The inflator is arranged at the specified position which is rearward from the impact reduction portion (where the inflator does not deform), so that the stable inflation of the airbag of the airbag device at the vehicle side collision can be obtained. Further, since the inflator which is a rigidity member is positioned in back of the impact reduction portion which deforms with the impact, any excessive load may not be given to the passenger by the inflator.

According to another embodiment of the present invention, the impact reduction portion is provided in back of a passenger-sitting front face of the seatback. Herein, the above-described passenger-sitting front face of the seatback means the front face of the seatback in a state in which the passenger seated leans against the seatback and thereby the pad member has been compressed to a certain degree so that the position of the front face of the seatback moves rearward from its normal position by the certain degree. Thereby, since the impact reduction portion is provided in back of the above-described passenger-sitting front face of the seatback, the impact which the passenger may receive from the deforming side frame at the vehicle side collision can be reduced.

According to another embodiment of the present invention, the seat structure of a vehicle further comprising a side support portion which is provided at the seatback so as to support the seated passenger from the vehicle side, wherein the side frame is arranged in back of a passenger-sitting front face of the seatback at a position which substantially corresponds to a chest portion of the passenger seated in the seat, not so as to extend forward beyond the passenger-sitting front face of the seatback, in a plan view. According to another embodiment of the present invention, the seat structure of a vehicle further comprising another hard pad member than the pad member is arranged inside the side support portion at a specified position which is located on a vehicle-inside of the side frame, which forms part of or constitutes the impact reduction structure. According to another embodiment of the present invention, the seat structure of a vehicle further comprising a side support portion which is provided at the seatback so as to support the seated passenger from the vehicle side, wherein the side frame is arranged in back of a passenger-sitting front face of the seatback at a position which substantially corresponds to a chest portion of the passenger seated in the seat, not so as to extend forward beyond the passenger-sitting front face of the seatback, in a plan view and another hard pad member than the pad member is arranged inside the side support portion at a specified position which is located on a vehicle-inside of the side frame, which constitutes the impact reduction structure. Herein, the above-described hard pad member may be made from a hard urethane material. Thereby, since the side frame is arranged in back of the passenger-sitting front face of the seatback, not so as to extend forward beyond the passenger-sitting front face of the seatback, in the plan view, the upper portion of the side frame can be formed to be properly slender. Accordingly, it can be avoided that the side frame contacts the passenger. Further, the passenger can be properly supported from the vehicle side by the pad member arranged along the inward side of the side frame at the normal state. Moreover, since the side frame does not exist at a position in front of the passenger-sitting front face of the seatback, no any particular problem occurs at the vehicle side collision. Further, even if the side frame deforms inward in the vehicle width direction at the vehicle side collision, this deformation may be received by the hard pad member, so that the safety of the passenger can be improved.

Other features, aspects, and advantages of the present invention will become apparent from the following description which refers to the accompanying drawings. It should be understood that even though embodiments are separately described, single features thereof may be combined to additional embodiments.
FIG. **1** is a schematic side view showing a seat structure of a vehicle according to a first embodiment of the present invention.
FIG. **2** is a sectional view taken along line **A-A** of FIG. **1****.**
FIG. **3** is a side view of a side frame.
FIG. **4** is a sectional view taken along line B-B of FIG. **3****.**
FIGS. **5A-5D** are sectional views showing structures of a weak portion.
FIG. **6** is an explanatory diagram showing a deformation state of the side frame at a vehicle side collision.
FIG. **7** is a side view showing another forming pattern of an impact reduction portion according to a second embodiment.
FIG. **8** is a side view showing another impact reduction portion using a slot according to a third embodiment.
FIG. **9** is a sectional view showing a seat structure of a vehicle equipped with a side airbag device according to a fourth embodiment.
FIG. **10** is a side view of a major part of FIG. **9****.**
FIG. **11** is an explanatory diagram at an airbag inflation.
FIG. **12** is a side view showing a modification of an inflator arrangement structure.
FIG. **13** is a sectional view showing a fifth embodiment in which an inflator is arranged on the vehicle-inside of the side frame.
FIG. **14** is an explanatory diagram at the airbag inflation.
FIG. **15** is a sectional view showing another impact reduction portion according to a sixth embodiment.
FIG. **16** is a sectional view showing a modification of the above-described impact reduction portion.
FIG. **17** is a sectional view showing another seat structure of a vehicle according to a seventh embodiment.
FIG. **18** is a sectional view showing a modification of the above-described seat structure of a vehicle.

Hereinafter, preferred embodiments of the present invention will be described referring to the accompanying drawings.

### EMBODIMENT 1

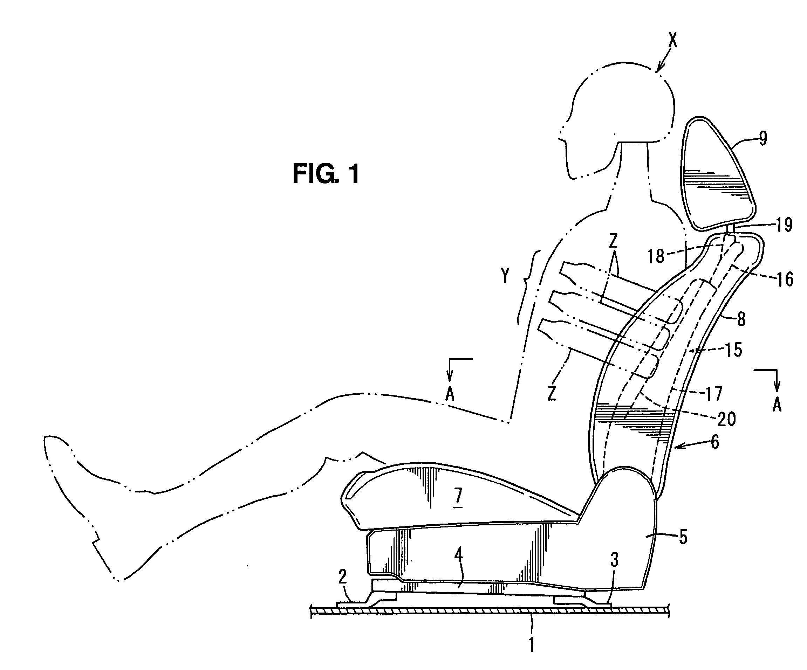

A first embodiment of the present invention will be described referring to FIGS. **1-6****.** The figures show a seat structure of a vehicle. In a schematic side view of FIG. **1****,** a seat slide rail **4** is provided on a floor panel **1** via plural seat attaching brackets **2, 3.**

The seat slide rail **4** comprises a fixed first or lower rail and a movable second or upper rail, and a seat **6** is provided at the second or upper rail via a seat cushion frame **5.** This seat **6** may be any one of a front seat, such as a driver's seat or a passenger's seat, a second-row rear seat, or a third-row rear seat, and the seat arranged on the left is shown in the present embodiment.

The seat **6** comprises a seat cushion **7** which at least partly forms a sitting face for a passenger, a seatback **8** which is connected to a rear portion of the seat cushion **7** and supports a back of the passenger seated in the seat **6** substantially from behind, and a headrest **9** which is provided at an upper portion of the seatback **8** and supports a head of the passenger seated in the seat **6** substantially from behind. Herein, a manikin (a so-called dummy) **X** is illustrated as the passenger in the figures, which comprises its chest portion **X** and its ribs **Z.**

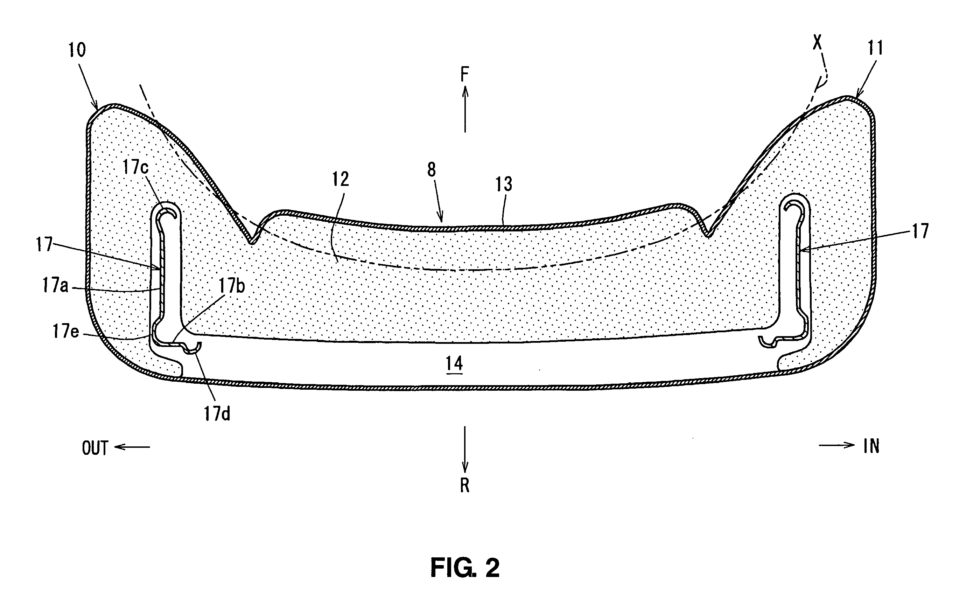

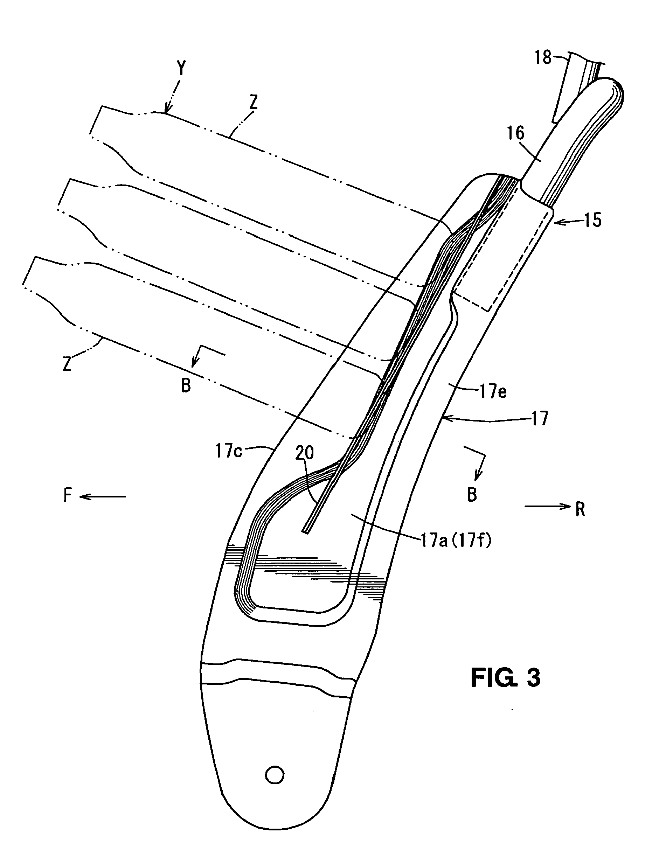

FIG. **2** is a sectional view (plan view) taken along line A-A of FIG. **1****,** and FIG. **3** is a side view of a major part in a state in which FIG. **2** is viewed from a vehicle outside. As shown in FIG. **2****,** the seatback **8** is equipped with one or more, preferably a pair of lateral (left and right) side support portions **10, 11** which supports the passenger (see the manikin **X)** seated in the seat **6** substantially from the vehicle sides. Further, the seatback **8** comprises a pad member **12** which forms its shape and a surface **13** which at least partly covers over the pad member **12** from outside, and it also has a space **14** at its back portion where no pad member exits for the purpose of weight reduction.

As shown in FIGS. **2** and **3****,** a seatback frame **15** is provided on a vehicle-inside of the seatback **8,** and this seatback frame **15** comprises a main frame **16** which particularly is formed in a gate shape in an elevation view, and a pair of side frames **17, 17** which substantially extends vertically on both sides of the main frame **16.** Further, as shown in FIGS. **1** and **3****,** a pole guide **18** (a so-called support pipe) is provided at or near an upper portion of the main frame **16,** and a headrest pole **19** of the headrest **9** is supported by the pole guide **18** so as to move substantially vertically. The above-described side frames **17, 17** are covered with the pad member **12** as shown in FIG. **2****.**

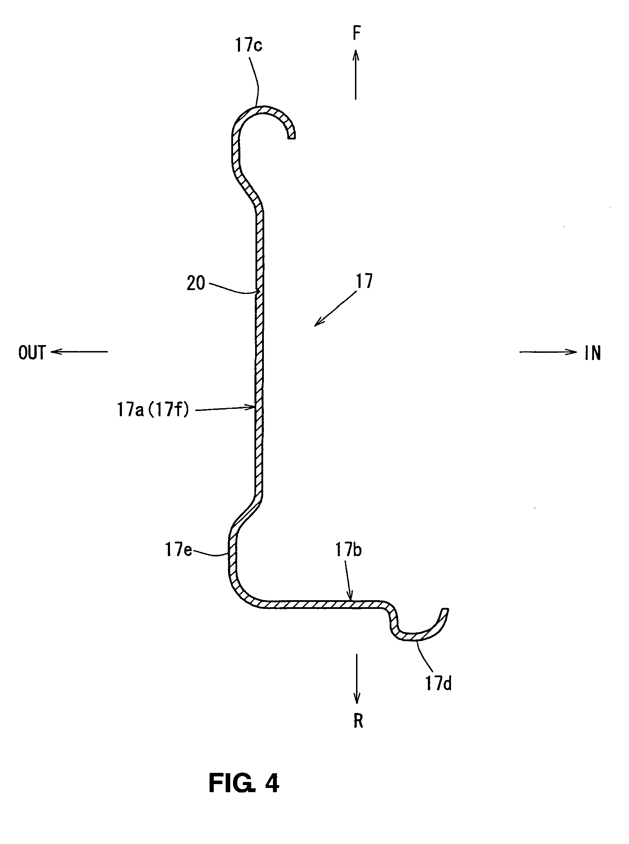

FIG. **4** is a sectional view taken along line B-B of FIG. **3****,** which shows a cross-section structure of the side frame **17.** As shown in FIG. **4****,** the side frame **17** comprises a side portion **17a** (particularly including a front bead portion **17c** and a projection portion **17e,** which will be described later) which substantially extends longitudinally, and a rear portion **17b** (particularly including a rear bead portion **17d,** which will be described later), and this side frame **17** particularly is formed substantially in a L or bent shape in a plan view. The front bead portion **17c** is formed integrally at a front end of the side portion **17a** and projects toward the both sides, i.e., inward and outward, substantially in the vehicle width direction. The rear bead portion **17d** is formed integrally at an inward end of the rear portion **17b** and projects rearward. The projection portion **17e** is formed integrally or unitarily at a rear portion of the side portion **17a** and projects substantially outward.

In other words, as shown by the side view of FIG. **3****,** between the front bead portion **17c** and the projection portion **17e** is formed a concave portion **17f** which substantially extends vertically along the longitudinal direction of the side frame **17.** The sufficient rigidity of the side frame **17** is ensured particularly by forming this concave portion **17f**.

Further, a weak portion **20,** which is an example of the impact reduction portion to reduce the impact from the vehicle side, is formed at the side portion **17a** of the side frame **17** so as to extend vertically as shown in FIG. **3****.**

As shown in FIG. **3****,** the weak portion **20** substantially extends vertically from an upper end of the side portion **17a** of the side frame **17** (or close thereto) to a lower portion of the side portion **17a** (or close thereto) through a portion corresponding to the chest portion of the passenger seated in the seat **6,** i.e., right behind the ribs **Z** of the manikin **X** shown by an imaginary line. This weak portion **20** causes a deformation of the side portion **17a** of the side frame **17** by the impact (at the vehicle side collision) from the vehicle side, thereby reducing the impact. While the weak portion **20** shown in FIG. **3** particularly substantially extends linearly and continuously, it may be formed so as to extend substantially continuously having small vertical gaps. Further, the forming pattern of the weak portion **20** may not necessarily be linear. In the present embodiment, when the impact acts from the vehicle side, the above-described weak portion **20** causes the side portion **17a** of the side frame **17** to substantially deform outward or inward.

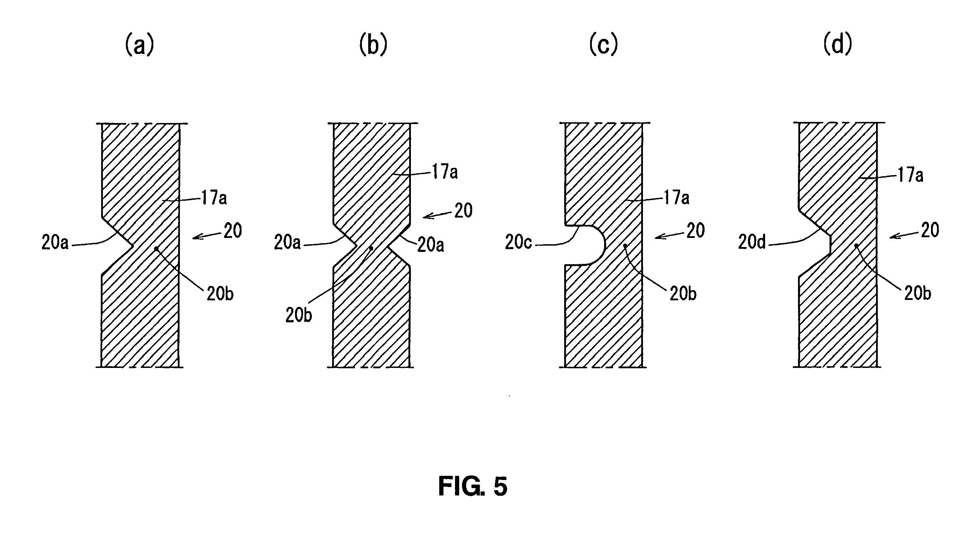

FIGS. **5A-5D** are sectional views showing specific structures of the weak portion **20** shown in FIGS. **3** and **4**. The weak portion **20** shown in FIG. **5A** particularly has a substantially V-shaped concave portion **20a** which is formed at one side of the side portion **17a**, and thus a thin portion **20b** of the side portion **17a** constitutes at least part of the weak portion **20.**

The weak portion **20** shown in FIG. **5B** particularly has substantially V-shaped concave portion **20a**, **20a** which are formed at both sides of the side portion **17a**, and thus a thin portion **20b** of the side portion **17a** constitutes at least part of the weak portion **20.**

The weak portion **20** shown in FIG. **5C** particularly has a substantially U-shaped concave portion **20c** which is formed at one side of the side portion **17a**, and thus a thin portion **20b** of the side portion **17a** constitutes at least part of the weak portion **20**.

The weak portion **20** shown in FIG. **5D** particularly has a substantially reverse-trapezoid-shaped concave portion **20d** which is formed at one side of the side portion **17a**, and thus a thin portion **20b** of the side portion 17a constitutes at least part of the weak portion **20**.

Any other modifications of the weak portion **20** shown in FIGS. **5A-5D** may be applied. For example, the concave portions **20c, 20d** shown in FIG. **5C, 5D** may be formed at the both sides. Further, the longitudinal length of the thin portion **20b** may be longer by prolonging the top portion of the trapezoid of the concave portion **20d** shown in FIG. **5D****.**

Any one of the structures shown in FIGS. **5A-5D** is or may be selected as the weak portion **20.** While a pair of right and loft side frames **17, 17** is arranged on both sides of the seatback **8** as shown in FIG. **2**, it is enough that the weak portion **20** is formed only at the outside-located side frame **17**. Of course, the weak portion **20** may be formed at the both side frames **17**, **17** and the seat **6** may be installed on the left side or the right side. In the figures, an arrow **F** shows a forward direction of the vehicle, an arrow **R** shows a rearward direction of the vehicle, an arrow **OUT** shows an outward direction of the vehicle, and an arrow **IN** shows an inward direction of the vehicle.

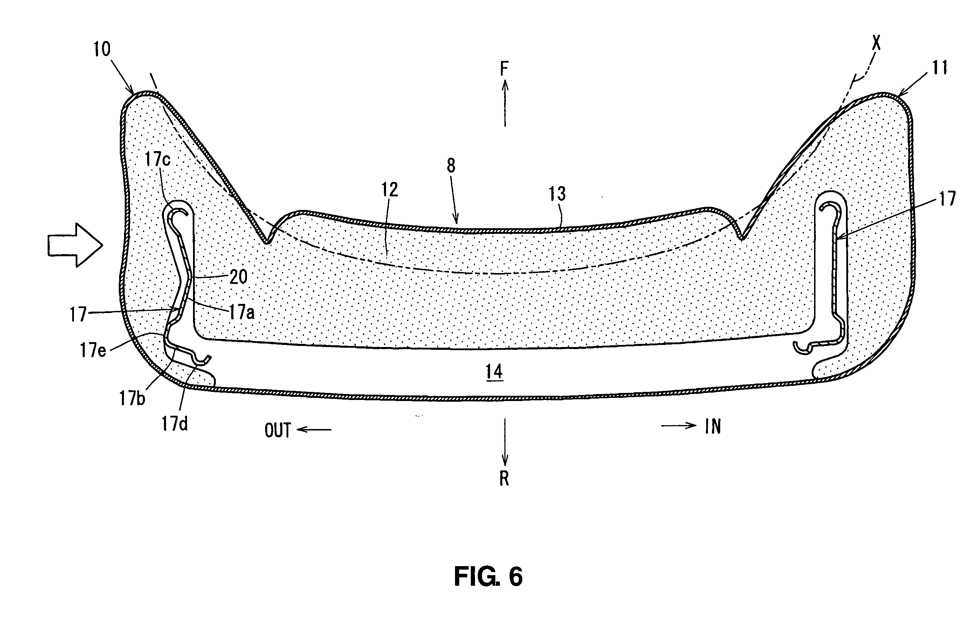

According to the seat structure of the vehicle described above, when the impact is inputted to the seat **6** from the vehicle side at the vehicle side collision, the weak portion **20** causes the deformation of the side portion **17a** of the side frame **17** as shown in FIG. **6**, so that the impact load is reduced and thereby the load inputted to the chest portion of the passenger can be decreased.

As described above, the seat structure of a vehicle according to the first embodiment shown in FIGS. **1-6** comprises the seatback frame **15** provided on the vehicle-inside of the seatback **8** which is provided at the rear portion of the seat cushion **7** of the seat **6** and supports the back of the passenger (see the manikin **X)** seated in the seat **6,** the side frame **17** extending substantially vertically beside the seatback frame **15**, and the pad member **12** at least partly covering the side frame **17**, the pad member **12** forming the shape of the seatback **8**, wherein the impact reduction portion (see the weak portion **20**) to reduce the impact from the vehicle side is provided at the side frame **17** (see FIGS. **1**, **2** and **3**).

According to this structure, since the impact reduction portion (see the weak portion **20**) is provided at the side frame **17** itself, the impact load from the vehicle side portion at the vehicle side collision can be reduced by the impact reduction portion (see the weak portion **20**), so that the load inputting to the passenger's chest portion can be decreased. Further, the above-described effect can be obtained without making the structure complex or increasing the number of parts and manufacturing steps.

Further, the impact reduction portion (see the weak portion **20**) causes the deformation of the side frame **17** by the impact from the vehicle side (see FIG. **6****).** Thereby, the load inputting to the passenger's chest portion can be properly decreased.

Moreover, since the side frame **17** deforms inside the pad member **12**, the hardness of the side frame **17** can be properly reduced with the pad member **12.** Accordingly, the reduction of the impact load acting on the passenger at the vehicle side collision can be properly achieved.

Additionally, the impact reduction portion comprises the weak portion **20** which is formed at the side frame **17** particularly so as to extend substantially vertically, the weak portion **20** being deformable by the impact from the vehicle side (see FIGS. **3** and **6**). Thereby, since the weak portion **20** of the impact reduction portion substantially extends vertically, the deformation of the side frame **17** (especially, the side portion **17a**) is caused by the weak portion **20** easily, so that the reduction of the inputted load to the passenger's chest portion can be properly achieved.

Further, the weak portion **20** comprises the thin portion **20b** which is formed at the side frame **17** (see FIGS. **4** and **5**). The thin portion **20b** can be easily formed by pressing concurrently with forming the side frame **17.**

Moreover, the impact reduction portion (see the weak portion **20**) is formed at the position which substantially corresponds to the chest portion (see the chest portion **Y** of the manikin **X** by the imaginary line in FIG. **3**) of the passenger seated in the seat **6** (see FIG. **3**). Thereby, the side frame **17** is made deform and/or split properly ("deform" in case of the first embodiment) at the position corresponding to the passenger's chest portion **Y**, so that the impact given to the passenger's chest portion **Y** can be reduced. Accordingly, the pressing of the chest portion **Y** of the passenger can be reduced.

### EMBODIMENT 2

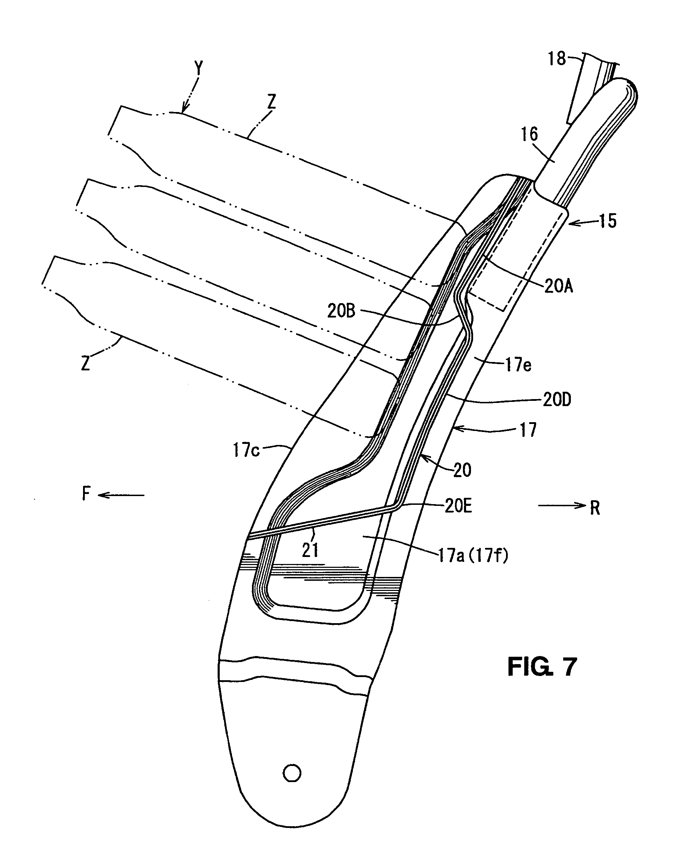

FIG. **7** shows another embodiment of the seat structure of a vehicle, in which another weak portion **21** is further formed so as to substantially extend continuously from the above-described weak portion **20** toward a front end portion of the side portion **17a** of the side frame **17**. That is, the above-described weak portion **20** comprises, at a position where the main frame **16** and sub frame **17** do not overlap with each other in the vehicle width direction, an upper portion **20A** which extends downward from the upper end of the side portion **17a** to a lower portion corresponding to the lower end of the main frame **16**, a middle portion **20B** which extends obliquely downward and rearward from the lower end of the upper portion **20A,** and a lower portion **20D** which extends downward from the lower end of the middle portion **20B** along the front side of the projection portion **17e.**

Further, another weak portion **21** is further formed so as to substantially extend from a lower end **20E** of the above-described weak portion **20** (or close thereto) toward the front end portion of the side portion **17a** of the side frame **17** (or close thereto). Thus, the weak portion **20** and the additional weak portion **21** particularly are made completely continuous from each other. Herein, the additional weak portion **21** is also continuous from the front bead portion **17c** for the purpose of splitting a front-side portion from the respective weak portions **20, 21** at the vehicle side collision.

As described above, in the second embodiment shown in FIG. **7**, the weak portion **21** is further formed so as to particularly extend continuously from the above-described weak portion **20** toward the front end portion of the side frame **17** (see FIG. **7****).** Thereby, both the weak portion **20** substantially extending vertically and the weak portion **21** formed at the front end portion of the side frame **17** can cause the split of the specified portion of the side frame **17** which may give the impact to the passenger at the vehicle side collision off a frame body of the side frame **17**. Thus, this specified (predetermined or predeterminable) portion of the side frame **17** may not be restrained by the pad member, so that the impact which the side frame **17** may give to the passenger can be reduced.

The other structures, operations and effects of the present embodiment are similar or substantially the same as those of the above-described first embodiment, so the similar or same portions as the first embodiment are denoted by the same reference characters in FIG. **7**, specific descriptions of which are omitted here. The forming pattern of the weak portions **20, 21** should not be limited to the ones shown in FIG. **7** as long as they are formed so as to be substantially continuous from the upper end of the side portion **17a** of the side frame **17** to the front end of the side portion **17a** through the position substantially corresponding to the chest portion of the passenger seated in the seat (the position behind the ribs **Z** of the manikin **X**).

### EMBODIMENT 3

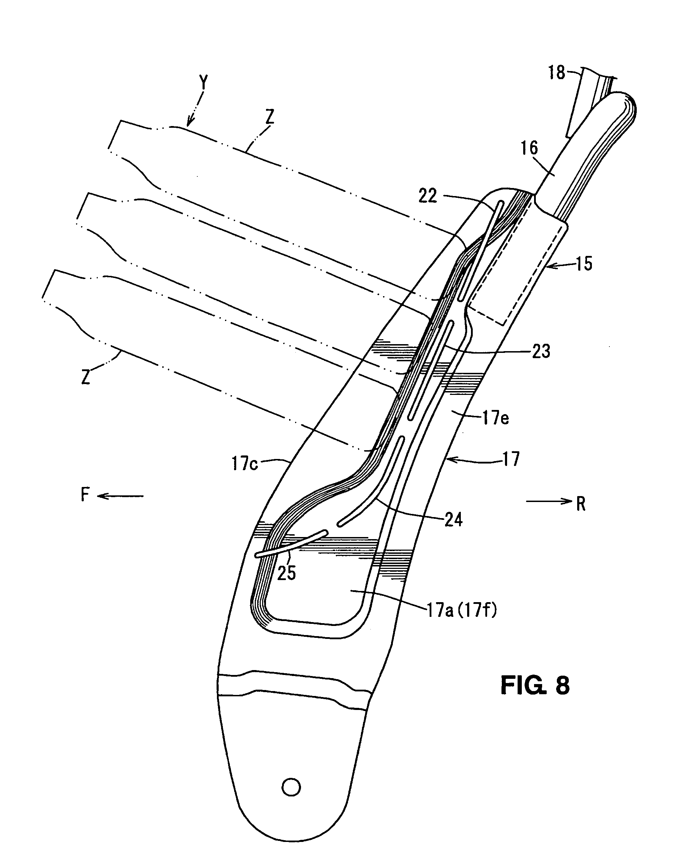

FIG. **8** shows further another embodiment of the seat structure of a vehicle, in which the impact reduction portion comprises plural slots **22, 23, 24, 25**. That is, the plural slots **22-25** as the impact reduction portion to reduce the impact from the vehicle side are formed at the side portion **17a** of the side frame **17**. The slots **22-25** cause the deformation of the side portion **17a** of the side frame **17** by the impact from the vehicle side, so that the impact can be reduced.

In the third embodiment, the first slot **22**, the second slot **23** and an upper portion of the third slot **24** particularly are formed at the side portion 17a of the side frame **17** so as to substantially extend vertically, a lower portion of the third slot **24** and the fourth slot **25** particularly are formed in an arc or bent shape, and/or the fourth slot **25** particularly is formed so as to be positioned substantially on an extension line of the third slot **24** and its lower end extends to near the front end of the side portion **17a.**

These slots **22-25** (opening portions) are formed so that the side portion **17a** of the side frame **17** exists between the adjacent slots (**22** and **23, 23** and **24, 24** and **25**), respectively. Thereby, the necessary rigidity of the side frame **7** at the normal state is ensured. That is, in the third embodiment, the first slot **22**, the second slot **23** and the upper portion of the third slot **24** constitute at least part of the weak portion extending vertically at the side frame **17**, and/or the lower portion of the third slot **24** and the fourth slot **25** constitute at least part of the other weak portion extending continuously from the above-described weak portion toward the front end portion of the side frame **17.**

According to the seat structure of the vehicle described above, when the impact is inputted to the seat **6** from the vehicle side at the vehicle side collision, the slots **22, 23, 24, 25** as the impact reduction portion cause the deformation of the side portion **17a** of the side frame **17**, so that the impact load is reduced and thereby the load inputted to the chest portion of the passenger can be decreased.

The other structures, operations and effects of the third embodiment are similar or substantially the same as those of the above-described embodiments, so the similar or same portions as the previous embodiments are denoted by the same reference characters in FIG. **8**, specific descriptions of which are omitted here. The forming pattern of the slots **22-25** should not be limited to the one shown in FIG. **7** as long as the slots are formed so as to extend from the upper end of the side portion **17a** of the side frame **17** to the front end of the side portion **17a** through the position substantially corresponding to the chest portion of the passenger seated (the position behind the ribs **Z** of the manikin **X**). Further, the length or the number of the slots **22-25** should not be limited to the ones shown in FIG. **8**, and the number of the slots may be three, or five or more.

### EMBODIMENT 4

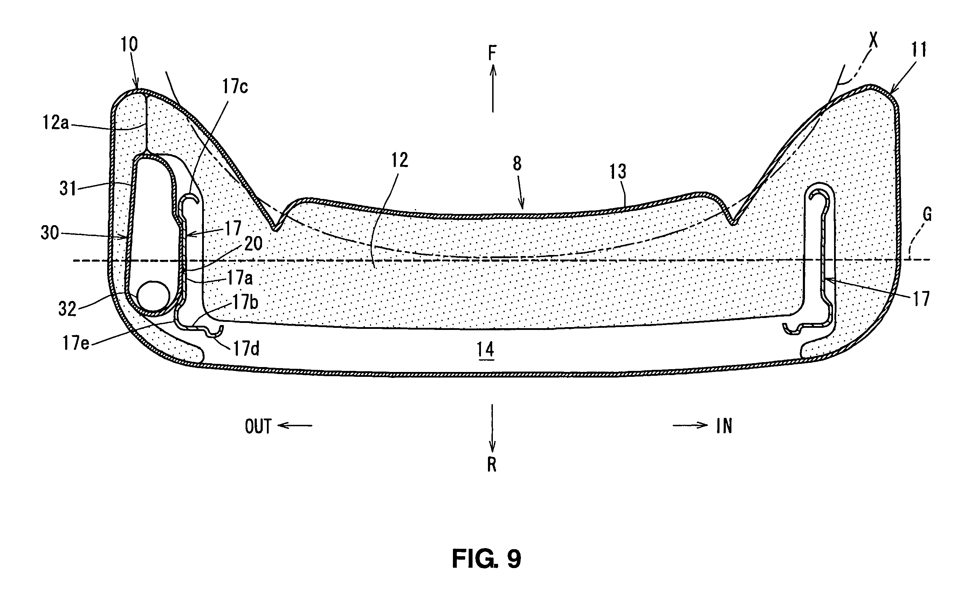

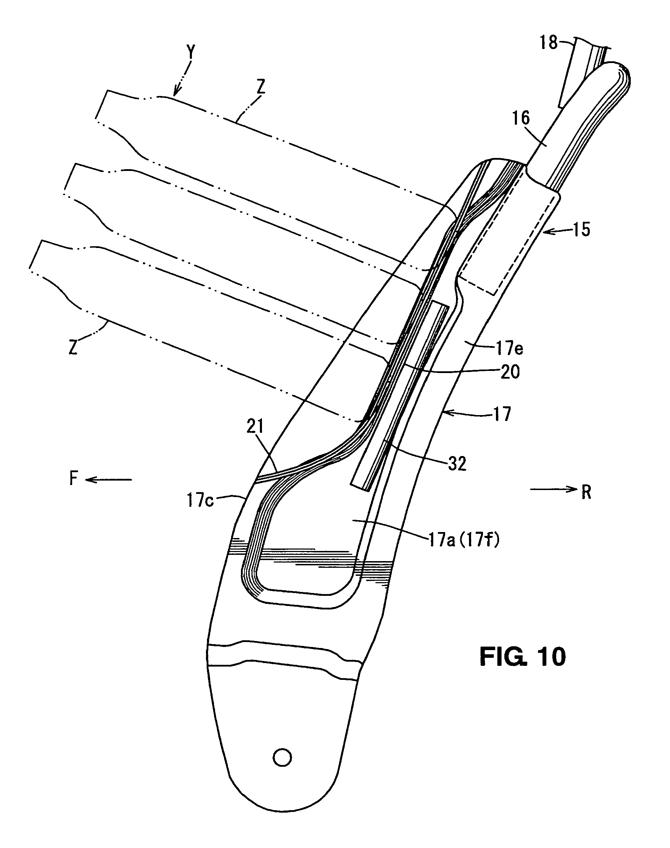

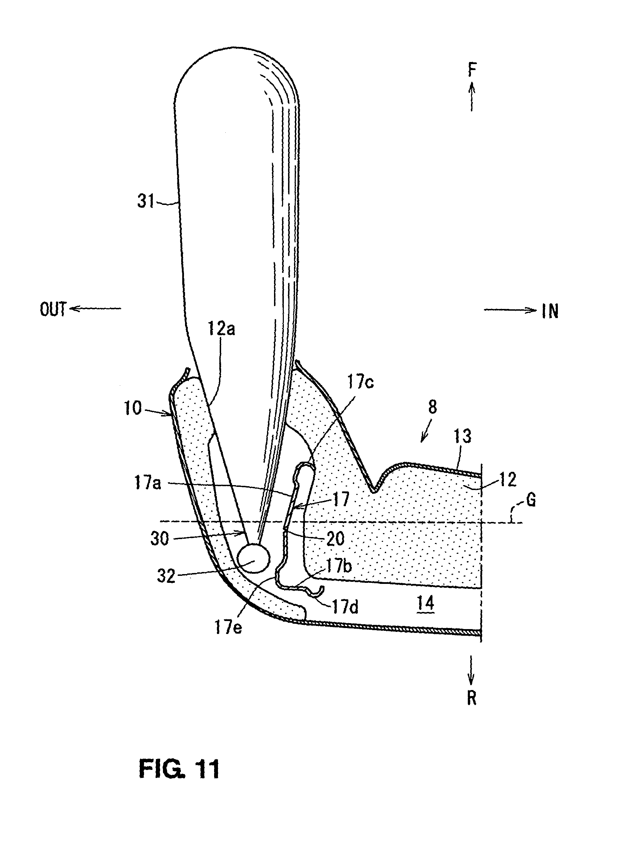

FIGS. **9****,** **10** and **11** show further another embodiment of the seat structure of a vehicle, and FIG. **9** is a plan view, FIG. **10** is a side view of its major part, and FIG. **11** is an explanatory diagram at the airbag inflation. In the fourth embodiment, as shown in FIG. **9**, a side airbag device **30** is provided on or near a vehicle-outside of the side portion **17a** of the side frame **17** (i.e., particularly on an outside of the side portion 17a of the side frame in the vehicle width direction).

The side airbag device **30** comprises an airbag **31** which is inflatable beside the passenger when a specified (predetermined or predeterminable) condition is satisfied (for example, a lateral acceleration inputted from the vehicle side exceeds a specified value), and an inflator **32** to supply gas or fluid for the airbag **31**. The side airbag device **30** is attached to the side frame **17,** and the airbag **31** is stored inside on the vehicle-outside of the side portion **17a** substantially over the side support portion **10**. Further, a slit **12a** is formed at a specified (predetermined or predeterminable) portion of the pad member **12** which substantially corresponds to the side of the passenger so that the airbag **31** can inflate forward from the front portion of the side support portion **10** beside the passenger (see FIG. **11**).

A specific illustration of the folding structure of the airbag **31** is omitted and the airbag **31** is schematically illustrated in FIG. **9**. In FIG. **9**, a reference character **G** denotes a passenger-sitting front face of the seatback **8** (a front face of the seatback **8** in a state in which the passenger leans against the seatback **8** and thereby the pad member **12** has been compressed to a certain degree), and the impact reduction portion **20** as the impact reduction portion is provided in back of the passenger-sitting front face **G**.

The above-described inflator **32** is arranged at a specified (predetermined or predeterminable) position which is rearward from the weak portion **20** as the impact reduction portion. That is, the inflator **32** particularly is provided at the position where the inflator **32** does not deform at the vehicle side collision. Further, the inflator **32** particularly is provided at the height position which substantially corresponds to the middle portion of the side portion **17a** of the side frame **17** as shown in FIG. **10**.

According to the seat structure of the vehicle described above, when the impact is inputted to the seat **6** from the vehicle side at the vehicle side collision, the gas or fluid is supplied into the airbag **31** according to the operation of the inflator **32**, so that the airbag **31** comes out of the slit **12a** of the side support portion **10** and inflates beside the passenger seated in the seat **6** as shown in FIG. **11**. The inflation pressure of the airbag **31** makes the weak portion **20** as the impact reduction portion cause the inward deformation of the side portion **17a** of the side frame **17**. This deformation of the side portion **17a** reduces the impact load, so that the load inputted to the chest portion of the passenger can be decreased.

According to the present embodiment shown in FIGS. **9****,** **10** and **11**, the side airbag device **30** with the airbag **31** which is inflatable beside the passenger when the specified condition particularly is satisfied is attached to the side frame **17**, and the inflator **32** to supply the gas or fluid for the airbag **31** is arranged at the specified (predetermined or predeterminable) position which is substantially rearward from the impact reduction portion (see the weak portion **20**) (see FIG. **9**). Thus, the inflator **32** is arranged at the specified position which is substantially rearward from the impact reduction portion (see the weak portion **20**), so that the stable inflation of the airbag **31** of the airbag device **30** at the vehicle side collision can be obtained.

Further, since the inflator **32** which is a rigidity member is substantially positioned in back of the impact reduction portion (see the weak portion **20**) which deforms with the impact, any excessive load may not be given to the passenger by the inflator **32**.

Further, the impact reduction portion (see the weak portion **20**) is provided in back of the passenger-sitting front face **G** of the seatback **8** (see FIG. **9**). Thereby, the impact which the passenger may receive from the deforming side frame 17 at the vehicle side collision can be reduced.

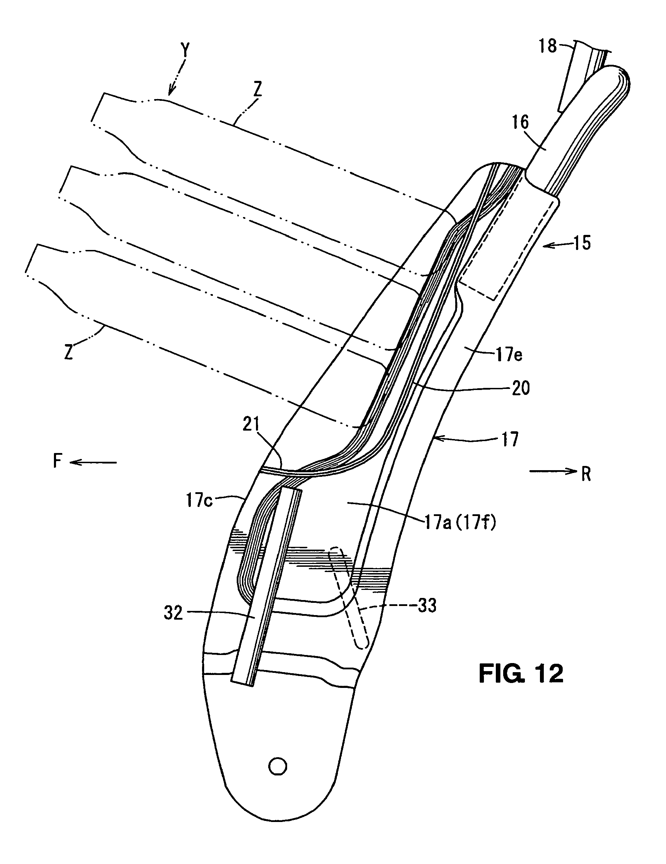

The other structures, operations and effects of the fourth embodiment shown in FIGS. **9-11** are similar or substantially the same as those of the above-described embodiments, so the similar or same portions as the previous embodiments are denoted by the same reference characters in FIGS. **9-11**, specific descriptions of which are omitted here. A structure shown in FIG. **12** may be applied in place of the structure shown in FIG. **10****.** That is, the inflator **32** is arranged at the specified portion of the side portion **17a** of the side frame **17** which substantially corresponds to the chest portion of the passenger in FIG. **10**, but in a modification shown in FIG. **12**, the inflator **32** is arranged at a specified portion in front of the side portion 17a of the side frame **17** which substantially corresponds to the waist portion of the passenger, and a lumber support lever **33** is arranged at a portion of the side portion 17a in back of the inflator **32** so as to be apart or offset from the inflator **32**.

Further, as shown in FIG. **12**, the side portion **17a** of the side frame **17** particularly is configured to be split into a front part and a rear part due to the weak portions **20, 21** at the vehicle side collision, and its front part is arranged in a split area, and its rear part, including its lower part, is arranged in a nun-split area (nondeformation area) where the inflator **32** and the lumber support **33** are provided. The inflator **32** is attached to a position below the weak portion **21** which corresponds to the waist portion of the passenger.

Thus, since the inflator **32** particularly is attached to the position corresponding to the waist portion of the passenger, it can be prevented that the chest portion of the passenger is hurt by the inflator **32** at the vehicle side collision, and the layout of the inflator **32** and the lumber support lever **33** can be provided, ensuring the front arrangement of the inflator **32**. The other structures, operations and effects of the present embodiment are substantially similar or the same as those of the above-described embodiment shown in FIGS. **9-11**, so the similar or same portions as the previous embodiments are denoted by the same reference characters in FIG. **12**, specific descriptions of which are omitted here.

### EMBODIMENT 5

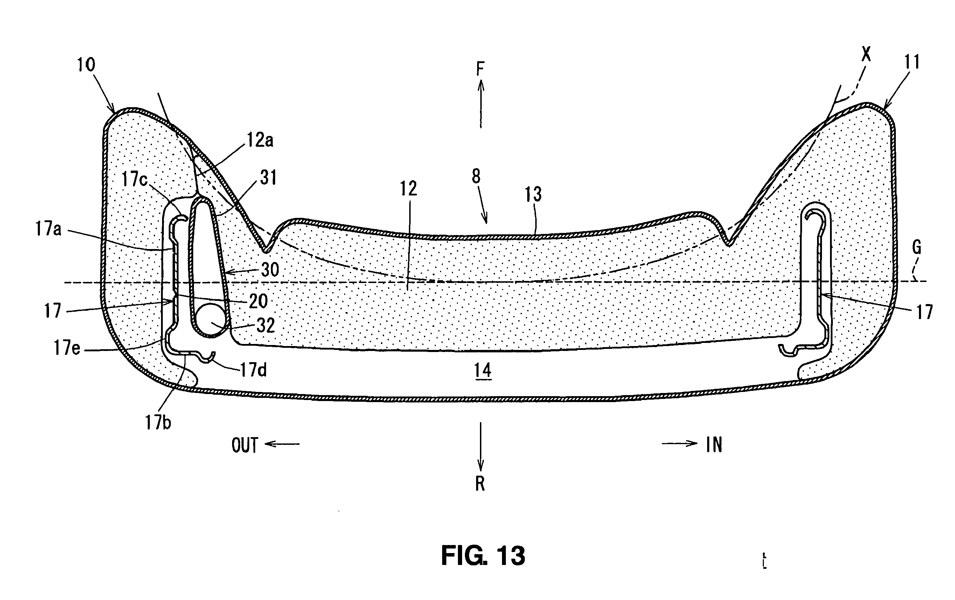

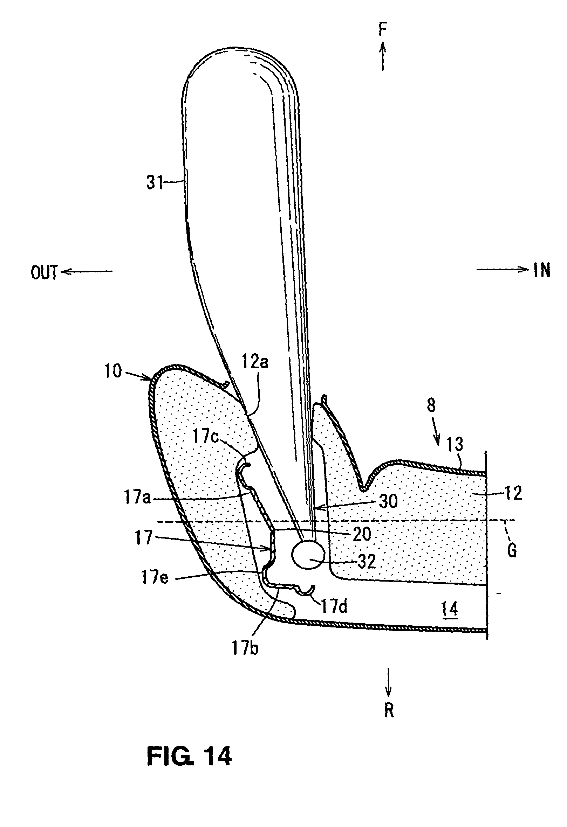

FIGS. **13** and **14** show further another embodiment of the seat structure of a vehicle, and FIG. **13** is a plan view, and FIG. **14** is an explanatory diagram at an airbag inflation. In the fifth embodiment, as shown in FIG. **13**, the side airbag device **30** is provided on the vehicle-inside of the side portion **17a** of the side frame **17**.

The side airbag device **30** comprises the airbag **31** which is inflatable beside the passenger when a specified (predetermined or predeterminable) scondition is satisfied (for example, the lateral acceleration inputted from the vehicle side exceeds a specified value), and the inflator **32** to supply the gas or fluid for the airbag **31**.

The side airbag device **30** is attached to the side frame **17**, and the airbag **31** is stored inside on the vehicle-inside of the side portion **17a** at least partly over the side support portion **10**. Further, the slit **12a** is formed at a specified (predetermined or predeterminable) portion of the pad member **12** which substantially corresponds to the side of the passenger so that the airbag **31** can inflate forward from the front portion of the side support portion **10** beside the passenger (see FIG. **14**). A specific illustration of the folding or collapsing structure of the airbag **31** is omitted and the airbag **31** is schematically illustrated in FIG. **13**. In FIG. **13**, the reference character **G** denotes the passenger-sitting front face of the seatback **8**, and the impact reduction portion **20** as the impact reduction portion is provided in back of or more backward than the passenger-sitting front face **G**.

The above-described inflator **32** is arranged at a specified (predetermined or predeterminable) position which particularly is rearward from the weak portion **20** as the impact reduction portion. That is, the inflator **32** is provided at the position where the inflator **32** does not deform at the vehicle side collision. Herein, the arrangement position of the inflator **32** in the vertical direction is the same as the position shown in FIG. **10**, but the inflator **32** may be arranged at the height position shown in FIG. **12**.

According to the seat structure of the vehicle described above, when the impact is inputted to the seat **6** from the vehicle side at the vehicle side collision, the gas or fluid is supplied into the airbag **31** according to the operation of the inflator **32**, so that the airbag **31** comes out of the slit **12a** of the side support portion **10** and inflates beside the passenger seated in the seat **6** as shown in FIG. **14**. The inflation pressure of the airbag **31** makes the weak portion **20** as the impact reduction portion cause the outward deformation of the side portion **17a** of the side frame **17**. This deformation of the side portion **17a** reduces the impact load, so that the load inputted to the chest portion of the passenger can be decreased.

According to the present embodiment shown in FIGS. **13** and **14****,** the side airbag device **30** with the airbag **31** which is inflatable beside the passenger when the specified condition is satisfied particularly is attached to the side frame **17**, and the inflator **32** to supply the gas or fluid for the airbag **31** is arranged at the specified position which particularly is rearward from the impact reduction portion (see the weak portion **20**) (see FIG. **13**). Thus, the inflator **32** is arranged at the specified (predetermined or predeterminable) position which is rearward from the impact reduction portion (see the weak portion **20**), so that the stable inflation of the airbag **31** of the airbag device **30** at the vehicle side collision can be obtained.

Further, since the inflator **32** which is at least part of the rigidity member is positioned in back of the impact reduction portion (see the weak portion **20**) which deforms with the impact, the passenger is not hurt by the inflator **32**. Further, the impact reduction portion (see the weak portion **20**) is provided in back of the passenger-sitting front face **G** of the seatback **8** (see FIG. **13**).

Thereby, since the impact reduction portion (see the weak portion **20**) particularly is provided in back of the passenger-sitting front face **G**, the impact which the passenger may receive from the deforming side frame **17** at the vehicle side collision can be reduced. The other structures, operations and effects of the fifth embodiment shown in FIGS. **13** and **14** are similar or substantially the same as those of the above-described fourth embodiment, so the similar or same portions as the previous embodiments are denoted by the same reference characters in FIGS. **13** and **14**, specific descriptions of which are omitted here.

### EMBODIMENT 6

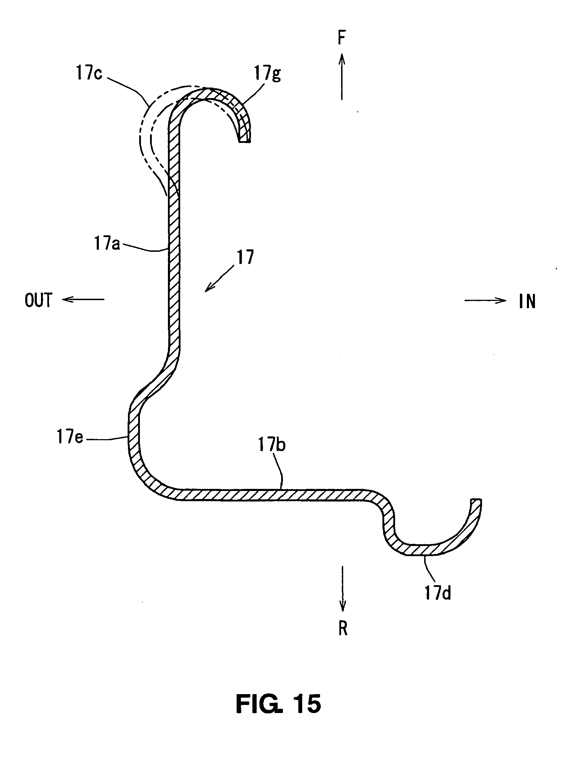

FIG. **15** shows another embodiment of the side frame **17**. While the weak portion **20**, such as the thin portion, is used as the impact reduction portion in the embodiments shown in FIGS. **3****,** **7****,** **10**, **12** and **13** and the plural slots **22-25** are used as the impact reduction portion in the embodiment shown in FIG. **8**, the side frame **17** is configured so that its rigidity portion is formed in a non-rigidity structure in the present embodiment shown in FIG. **15**. That is, a low-rigidity curve portion (particularly substantially half circular portion) **17g** is formed in place of the high-rigidity front bead portion **17c** shown by the imaginary line. This curve portion **17g** particularly is formed so as not to project outward from the side portion **17a** as shown, and this portion **17g** has a low rigidity and thereby functions as the impact reduction portion.

As shown in FIG. **15****,** in case the above-described side frame **17** equipped with the low-rigidity curve portion **17g** is installed to the seatback **8** shown in FIG. **2****,** for example, the low-rigidity curve portion **17g** at least partly absorbs the impact load from the vehicle side at the vehicle side collision by deforming, so that the load inputted to the chest portion of the passenger can be reduced. Herein, the vertical range where the above-described curve portion **17g** particularly is basically set to an area which only corresponds to the chest portion of the passenger seated in the seat, but that may be set to an entire height area of the side frame **17**, considering easy manufacturing of the side frame **17**.

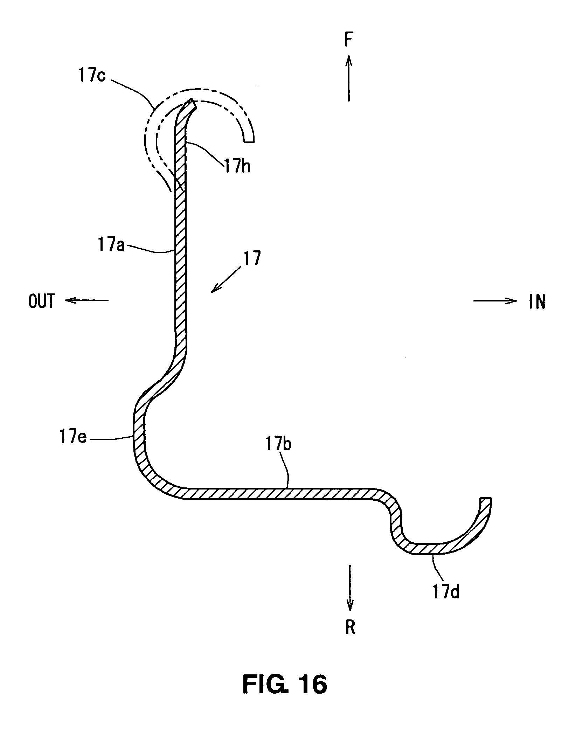

Further, in place of the structure shown in FIG. **15**, a modification of the side frame **17** is shown in FIG. **16**. Herein, the modified side frame **17** is configured so that its rigidity portion is formed in the non-rigidity structure as well. That is, a low-rigidity substantially-straight portion **17h** is formed in place of the high-rigidity front bead portion **17c** shown by the imaginary line in FIG. **16**. This substantially-straight portion **17h** is formed so as to extend almost on an extension line of the side portion **17a** as shown, and this portion **17h** has the low rigidity and thereby functions as the impact reduction portion as well.

As shown in FIG. **16**, in case this side frame **17** equipped with the low-rigidity substantially-straight portion **17h** is to be installed to the seatback **8** shown in FIG. **2****,** for example, the low-rigidity substantially-straight portion **17h** at least partly absorbs the impact load from the vehicle side at the vehicle side collision by deforming, so that the load inputted to the chest portion of the passenger can be reduced. Herein, the vertical range where the above-described substantially-straight portion **17h** is basically set to the area which only corresponds to the chest portion of the passenger seated in the seat like the above-described embodiment shown in FIG. **5**, but that may be set to a greater area up to an entire height area of the side frame **17**, particularly considering the easy manufacturing of the side frame **17.**

Herein, since the side frame **17** is equipped with the rear bead portion **17d** and the projection portion **17e** in these embodiments shown in FIGS. **15** and **16** as well, the minimum necessary rigidity of the side frame **17** can be ensured for the normal state (the vehicle non-collision state). The similar or same portions shown in FIGS. **15** and **16** as the previous embodiment shown in FIG. **4** are denoted by the same reference characters, specific descriptions of which are omitted here.

### EMBODIMENT 7

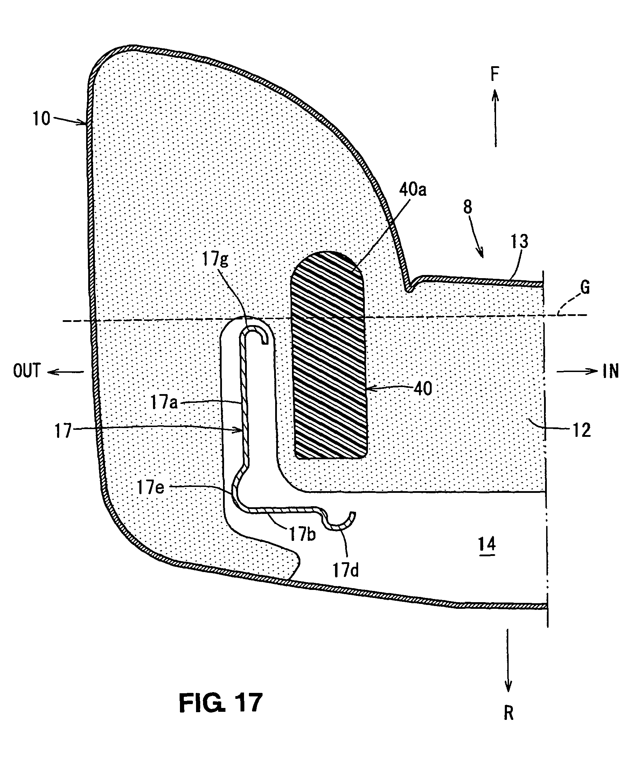

FIG. **17** is a sectional view showing further another embodiment of the seat structure of a vehicle. In the present embodiment, the seatback **8** comprises the side support portion **10** which supports the passenger seated in the seat **6** from the vehicle side, and the side frame **17** with the substantially bent or L-shaped cross section which has the side portion **17a** and the rear portion **17b**. The side frame **17** substantially extends vertically beside the seatback frame **15.**

The reference character **G** shows the passenger-sitting front face of the seatback **8** in FIG. **17**, and the side frame **17** does not project forward from the passenger-sitting front face **G** inside the side support portion **10** in the plan view of the seat. That is, the side frame 17 is arranged in back of the above-described passenger-sitting front face **G** of the seatback **8.**

Further, a hard pad member **40** as another impact reduction portion than the above-described pad member **12** is provided inside or at the side support portion **10** on the vehicle-inside of the side frame **17**. This hard pad member **40**, which particularly may be made of a hard urethane material, is arranged so that its front portion **40a** projects substantially forward from the passenger-sitting front face **G** so as to support the passenger seated in the seat **6** from the vehicle side properly.

According to the seat structure of a vehicle described above, even when the impact is inputted to the seat **6** from the vehicle side at the vehicle side collision and thereby the side frame **17** deforms inward, the side frame **17** does not project forward from the passenger-sitting front face **G,** resulting in causing no problem in particular. Even if the side frame **17** deforms inward at the vehicle side collision, the side frame deforming can be received by the hard pad member **40.** Accordingly, the safety of the passenger seated in the seat **6** can be ensured properly.

As described above, the seat structure of a vehicle according to the seventh embodiment shown in FIG. **17** further comprising the side support portion **10** which is provided at the seatback **8** so as to support the seated passenger from the vehicle side, wherein the side frame **17** particularly is arranged in back of the passenger-sitting front face **G** of the seatback **8** at the position which substantially corresponds to the chest portion of the passenger seated in the seat **6,** not so as to extend forward beyond the passenger-sitting front face **G** of the seatback **8,** in the plan view and at least another hard pad member **40** than the pad member **20** is arranged inside the side support portion **10** at the specified (predetermined or predeterminable) position which is located on the vehicle-inside of the side frame **17** (see FIG. **17** and the previous figure). Thereby, since the side frame **17** is arranged substantially in back of the passenger-sitting front face **G** of the seatback **8,** not so as to extend forward beyond the passenger-sitting front face **G** of the seatback **8,** in the plan view of the seat (see FIG. **17****),** the upper portion of the side frame **17** can be formed to be properly slender. Accordingly, it can be avoided that the side frame **17** contacts the passenger.

Further, the passenger can be properly supported from the vehicle side by the hard pad member **40** (the front portion **40a** thereof, in particular) substantially arranged along the inward side of the side frame **17** at the normal state. Moreover, since the side frame **17** does not exist at a position in front of the passenger-sitting front face **G** of the seatback **8** in the plan view of the seat (see FIG. **17****),** any particular problem occurs at the vehicle side collision. Further, even if the side frame **17** deforms inward in the vehicle width direction at the vehicle side collision, this deformation may be received by the hard pad member **40,** so that the safety of the passenger can be improved properly.

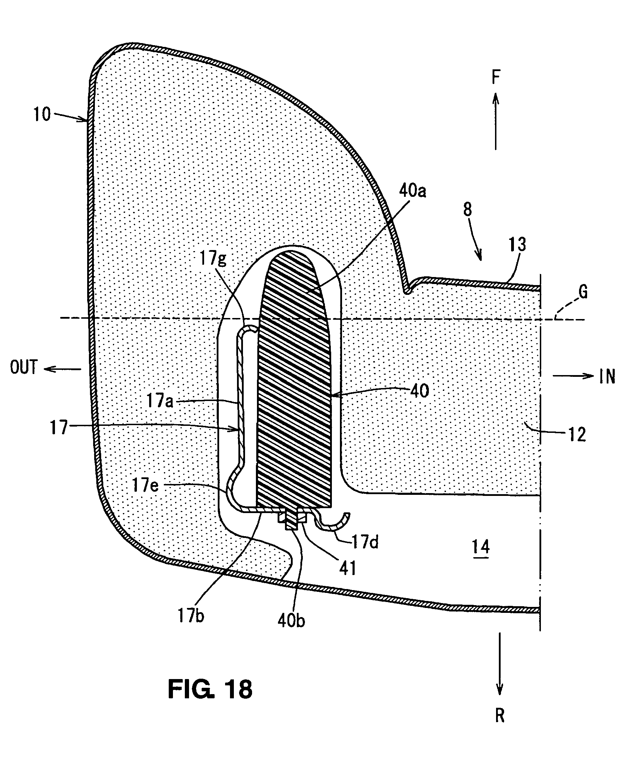

The other structures, operations and effects of the fourth embodiment shown in FIG. **17** are similar or substantially the same as those of the above-described embodiments, so the similar or same portions as the previous embodiments are denoted by the same reference characters in FIG. **17****,** specific descriptions of which are omitted here. A structure shown in FIG. **18** may be applied in place of the structure shown in FIG. **17****.**

While the hard pad member **40** particularly is arranged inside the pad member **12** which forms the shape of the seatback **8** on the vehicle-inside of the side frame **17** according to the structure shown in FIG. **17****,** in the example shown in FIG. **18****,** the hard pad member **40** is fixed to the side frame **17,** not being arranged inside the pad member **12.**

That is, as shown in FIG. **18****,** one or more fixing members such as plural bolts **40b** (only one bolt is illustrated in FIG. **18****),** which particularly may be made from hard urethane, particularly are integrally or unitarily formed at a rear end portion of the hard pad member **40.** This hard pad member **40** is detachably attached to a front face of the rear portion **17b** of the side frame **17** by fastening nuts **41** to the bolts **40b,** so that the hard pad member **40** is arranged on the vehicle-inside of the side portion **17a** of the side frame **17.** Since the structure shown in FIG. **18** provides substantially the same operations and effects as those of the embodiment shown in FIG. **17****,** the similar or same portions are denoted by the same reference characters in FIG. **18****,** specific descriptions of which are omitted here.

The present should not be limited to the above-described embodiments, and any other modifications or improvements can be applied within the scope of a sprit of the present invention. For example, the above-described seat structure of a vehicle may be arranged only on the vehicle-outside of the seatback, or on both sides of the seatback.

## Claims

1. A seat structure of a vehicle, comprising:
a seatback frame **(15)** provided on a vehicle-inside of a seatback **(8)** which is provided at a rear portion of a seat cushion **(7)** of a seat **(6)** and supports a back of a passenger seated in the seat **(6);**
a side frame **(17)** extending vertically beside the seatback frame **(15);** and
at least one pad member **(12)** covering the side frame **(17),** the pad member **(12)** forming at least part of a shape of the seatback (8),
wherein an impact reduction structure **(20; 22-25; 17g; 17h)** to reduce an impact from a vehicle side is provided.

2. The seat structure of a vehicle of claim 1, wherein said impact reduction structure comprises an impact reduction portion **(20; 22-25; 17g; 17h)** to reduce the impact from the vehicle side is provided at said side frame **(17).**

3. The seat structure of a vehicle of claim 2, wherein said impact reduction portion **(20; 22-25; 17g; 17h)** causes deformation of the side frame **(17)** by the impact from the vehicle side.

4. The seat structure of a vehicle of claim 2 or 3, wherein said impact reduction portion comprises a weak portion **(20; 22-25; 17g; 17h)** which is formed at the side frame **(17)** so as to extend vertically, the weak portion **(20; 22-25; 17g; 17h)** being deformable by the impact from the vehicle side.

5. The seat structure of a vehicle of claim 4, wherein said weak portion **(20)** comprises a thin portion **(20b)** formed at the side frame **(17).**

6. The seat structure of a vehicle of claims 4 or 5, wherein another weak portion **(21; 24, 25)** is further formed so as to extend continuously from said weak portion **(20; 22-24)** toward a front end portion of the side frame **(17).**

7. The seat structure of a vehicle of any one of claims 2 through 6, wherein said impact reduction portion **(20; 22-25; 17g; 17h)** is formed at a position which substantially corresponds to a chest portion of the passenger seated in the seat **(6).**

8. The seat structure of a vehicle of any one of claims 2 through 7, wherein a side airbag device **(30)** with an airbag **(31)** which is inflatable beside the passenger when a specified condition is satisfied is attached to the side frame **(17),** and an inflator **(32)** to supply gas for the airbag **(31)** is arranged at a specified position which is rearward from said impact reduction portion **(20).**

9. The seat structure of a vehicle of any one of claims 2 through 8, wherein said impact reduction portion **(20)** is provided in back of a passenger-sitting front face (G) of the seatback **(8).**

10. The seat structure of a vehicle of any one of the preceding claims, further comprising a side support portion **(10)** which is provided at the seatback **(8)** so as to support the seated passenger from the vehicle side, wherein said side frame **(17)** is arranged in back of a passenger-sitting front face **(G)** of the seatback **(8)** at a position which substantially corresponds to a chest portion of the passenger seated in the seat **(6),** not so as to extend forward beyond the passenger-sitting front face **(G)** of the seatback **(8),** in a plan view.

11. The seat structure of a vehicle of any one of the preceding claims, further comprising another hard pad member **(40)** than said pad member **(12)** is arranged inside the side support portion **(10)** at a specified position which is located on a vehicle-inside of the side frame **(17),** which forms part of or constitutes said impact reduction structure.
